Europäisches Patentamt

**European Patent Office**

Office européen des brevets

(19)

(11) Publication number : **0 392 876 B1**

(12)

# EUROPEAN PATENT SPECIFICATION

(45) Date of publication of patent specification :
04.08.93 Bulletin 93/31

(51) Int. Cl.⁵ : **B01J 13/16, B41M 5/165**

(21) Application number : **90304094.7**

(22) Date of filing : **17.04.90**

(54) **Preparing microcapsules.**

(30) Priority : **14.04.89 US 388014**
**13.11.89 US 435319**

(43) Date of publication of application :
**17.10.90 Bulletin 90/42**

(45) Publication of the grant of the patent :
**04.08.93 Bulletin 93/31**

(84) Designated Contracting States :
**DE ES FR GB IT**

(56) References cited :
**DE-A- 2 242 910**
**DE-A- 2 251 381**
**FR-A- 2 476 100**

(73) Proprietor : **THE MEAD CORPORATION**
**Mead World Headquarters Courthouse Plaza**
**Northeast**
**Dayton Ohio 45463 (US)**

(72) Inventor : **Schwab, Gerhart**
**331 Shannon Drive**
**Chillicothe, Ohio 45601 (US)**
Inventor : **Szczepanski, Nadine Marie**
**6 Oakwood Drive**
**Chillicothe, Ohio 45601 (US)**

(74) Representative : **Deans, Michael John Percy et**
**al**
**Lloyd Wise, Tregear & CO. Norman House**
**105-109 Strand**
**London WC2R OAE (GB)**

## Description

The present invention relates to a process for preparing microcapsules.

In the manufacture of pressure-sensitive recording papers, a layer of pressure-rupturable microcapsules containing a solution of colorless dyestuff precursor is coated on the back side of the front sheet of paper of a carbonless copy paper set. This coated backside is known as the CB coating. In order to develop an image or copy, the CB coating is mated with a paper containing a coating of a suitable color developer, also known as dyestuff acceptor, on its front. This coated front color developer coating is called the CF coating. The color developer is a material, usually acidic, capable of forming the color of the dyestuff by reaction with the dyestuff precursor.

Marking of the pressure-sensitive recording papers is effected by rupturing the capsules in the CB coating by means of pressure to cause the dyestuff precursor solution to be exuded onto the front of the mated sheet below it. The colorless or slightly colored dyestuff, or dyestuff precursor, then reacts with the color developer in the areas at which pressure was applied, thereby effecting the colored marking. Such mechanism for the technique of producing pressure-sensitive recording papers is well known.

Among the well known color developers used on CF record sheets are phenolic-type resins, such as acetylated phenolic resins, salicylic acid modified phenolics and, particularly, novolac type phenolic resins.

Among the well known basic, reactive, colorless chromogenic dye precursors useful for developing colored marks when and where applied to a receiving sheet coated with such color developers are Crystal Violet Lactone (CVL), the p-toluenesulfinate salt of Michler's Hydrol or 4,4'-bis(diethylamino)benzhydrol, Benzoyl Leuco Methylene Blue (BLMB), Indolyl Red, Malachite Green Lactone, 8'-methoxybenzoindoline spiropyran, Rhodamine Lactone, and mixtures thereof.

A number of microencapsulation techniques has been used to prepare oil-containing microcapsules. Some of the principal techniques are complex coacervation (typically used to prepare gelatin capsules), interfacial polymerization (typically used to prepare polyurethane and polyurea capsules) and in situ polymerization (used to prepare urea-formaldehyde and melamine-formaldehyde capsules).

A practice has developed in which microcapsules and/or color developers are not coated on paper at the mill but are printed on paper by a forms manufacturer on the forms press. A number of methods has been described in the patent literature for preparing microcapsule compositions for application on a forms press. U.S. Patent 4,139,392 to Davis et al. discloses a hot melt coating composition containing microcapsules in which microcapsules are dispersed in a wax composition with the aid of an anionic dispersing agent.

U.S. Patent 4,171,981 to Austin et al. describes another method for preparing a print on composition containing microcapsules in which an aqueous slurry of microcapsules is mixed with a hot melt suspending medium and a wiped film evaporator is used to remove the water.

U.S. Patent 4,729,792 to Seitz discloses yet another method in which microcapsules are prepared by interfacial cross-linking of a polysalt formed by reaction of a polyamine and a polyanionic emulsifier with a polyisocyanate. The microcapsules are separated by adding a lipophilizing agent to the capsule slurry. The lipophilizing agent reacts with the polyanionic emulsifier and renders it non-polar such that the microcapsules precipitate from the slurry. The microcapsules can then be dispersed in an ink vehicle with the aid of a dispersing agent. It should be noted that dispersing agents are necessary for dispersing in both polar and non-polar printing ink vehicle.

In accordance with a first aspect of the present invention, we provide a process for preparing a suspension of microcapsules containing at least 40% and preferably at least 50% microcapsules, and containing at least 60% non-aqueous solids comprising the steps of dispersing an oily solution containing a first reactive wall-forming component into a continuous aqueous phase to form an oil-in-water emulsion, adding to said oil-in-water emulsion a solution of a second reactive wall-forming component in which said solution and/or said continuous phase there is contained a non-aqueous water-miscible solvent preferably a polyhydric alcohol, the total amount of said non-aqueous solvent in the continuous phase after addition of said solution being 10-45%; and reacting said first reactive wall-forming component with said second reactive wall-forming component to form a polymer wall around the oil droplets in said oil-in-water emulsion; the amount of oil dispersed in said oil-in-water emulsion being at least 45% and preferably 5560% based on the total amount of oil, water and water miscible solvent.

We describe hereinbelow examples of our process which provide a suspension of microcapsules having a high concentration of microcapsules and a manageable viscosity which can be applied to paper on a printing press with little or no curl or cockle and little or no drying.

Our invention is particularly useful for the preparation of polyurea microcapsules; however, it can also be used in conjunction with the preparation of other microcapsules. In preparing polyurea microcapsules, an oil-in-water (O/W) emulsion is prepared by dispersing an oily internal phase material in a continuous aqueous phase. The oil phase contains a polyisocyanate which reacts with an amine at the oil/water interface to form a polyurea microcapsule wall. A portion of the water in the continuous phase is replaced with a non-aqueous, water miscible, liquid solvent. The non-aqueous solvent becomes part of the coating vehicle and in some cases it may essentially form the coating vehicle. By using a non-aqueous solvent, a capsule slurry is obtained which typically contains at least 40% and still more typically about 45 to 55% capsules and which can be coated with little or no drying, with little or no curl, and without separating or concentrating the microcapsules.

Rather than making a slurry of microcapsules having a low solids content and concentrating it, examples of our present process aim to produce a slurry which can be coated directly (possibly with the addition of a small amount of latex) by substituting a portion of the water normally present in the continuous phase during the preparation of microcapsules with a water miscible solvent. The resulting, low water capsule slurry essentially is the coating composition which needs only minor additions of binder and anti-curl salts. Furthermore, the viscosity of the composition may be relatively low, typically 150 to 600 cps and preferably 150 to 400 cps.

In a preferred embodiment, polyurea microcapsules are prepared by reacting a polyisocyanate as the first reactive wall-forming component and a polyamine as the second reactive wall-forming component The polyamine is preferably added to the O/W emulsion as a solution of its hydrochloric acid salt in a liquid (r.t.) polyhydric alcohol containing solvent and, more particularly, propylene glycol. This solvent may consist of a polyhydric alcohol or it may be a mixed solution such as a solution of a liquid polyhydric alcohol and water.

According to the invention the concentration of non-aqueous solids is maximized. The ratio of the amount of the oil phase to the aqueous phase (inclusive of the water miscible solvent) in the O/W emulsion which is at least 45%, i.e., 45 parts oil per 100 parts water, solvent, and oil, is preferably at least 55%. Generally, the oil phase may make up as much as 60% of the O/W emulsion.

A slurry of microcapsules obtained by the aforementioned process may be coated on paper as a printing ink or small amounts of a latex binder may be added to the slurry to prepare a printing ink vehicle. This composition gives high image intensities at low coating weights because of its high payload and the amount of water introduced into a 15 lb, (6,8 kg)=paper is on the order of 1 to 2%, not enough to necessitate drying or to cause noticeable cockle or curl. A typical formulation is:

```
                               %

water                         28.7
capsules                      51.5
propylene glycol              10.3
latex                          3.5
urea                           4.0
MgCl2·6H2O                      1.5
Dispex N-40                    0.5
```

Small percentages of anti-curl additives may be added.

The teachings of the present invention are useful in preparing microcapsules by any process in which the presence of a water miscible, non-aqueous solvent in the continuous phase does not interfere with the preparation of the microcapsules. It is particularly useful in preparing microcapsules by interfacial polymerization.

In a preferred embodiment, polyurea microcapsules are prepared by reacting an oil phase polyisocyanate with an aqueous phase polyamine, also containing a substantial amount of a non-aqueous water soluble solvent, Numerous examples of such processes are available in the patent literature including U.S. Patents 4,193,889 to Baatz et al; U.S. Patent 4,404,251 to Jabs et al; U.S. Patent 4,138,362 to Vassiliades et al; U.S. Patents 3,796,669 and 3,886,085 to Kiritani et al; U.S. Patent 4,299,723 to Dahm et al; and U.S. Patent 4,729,792 to Seitz among others.

Numerous other microencapsulation methods are known in the art including methods for preparing polyamide microcapsules by reacting an acid chloride with an amine, methods for preparing polyester microcapsules by reacting an oil phase acid chloride with an aqueous phase bisphenol; methods for preparing polysulfonamide microcapsules by reacting an oil phase sufonyl chloride with an aqueous phase amine; methods for preparing polysulfonate microcapsules by reacting an oil phase sufonyl chloride with an aqueous phase bisphenol; methods for preparing polyurethane microcapsules by reacting an oil phase isocyanate with an aqueous phase bisphenol; methods for preparing polyurethane microcapsules by reacting an oil phase bischloroformate with an aqueous phase amine and methods for preparing epoxy microcapsules by reacting an oil phase epoxy compound with an aqueous phase amine. Some of these methods are described in U.S. Patent 4,599,271 to Chao.

Methods of interfacial polymerization generally involve producing an aqueous dispersion of a water immiscible oily liquid containing one reactive wall-forming component in an aqueous phase. A second wall-forming component is added to the aqueous phase whereupon the reactants form a polymeric wall at the interface between aqueous and oily phases. For example, the oily dispersed phase may contain compounds such as diacid chlorides, disulfonyl chlorides, polyisocyanates, etc., and the aqueous phase may contain polyhydric compounds such as diethylenetriamine, polyols, etc.

The present process is particularly suitable for the preparation of polyurea microcapsules by reacting a polyisocyanate in the oil phase with a polyamine in the aqueous phase. Examples of polyisocyanate compounds that are particularly useful in practice of the present invention include toluene diisocyante (TDI), 1,4-cyclohexylenediisocyanate 4,4'-bisphenylene diisocyanate, 4-methyl-1,2-phenylenediisocyanate, 3,3'-dimethyl-4,4'-biphenylenediisocyanate, 1,4-phenylenediisocyanate, hexamethylenediisocyanate, octamethylenediisocyanate, p,p'-diphenylmethane diisocyanate, 4-methyl-1,3-phenylene diisocyante, 2,4,6-trimethyl-1,3-phenylene diisocyanate, bis(3-isocyanatocylohexyl)methane,2,3,5,6-tetra-methyl-1,4-phenylne diisocyanate, 1,2-bis(4-isocyanatophenyl)ethane, 2,2-bis(4-isocyanatophenyl)ether, bis(4-isocyanatophenyl)sulfone, 4,4'diphenyl methanediisocyanate, triphenylmethane-P,P',P"-triisocyanate, polyisocyanate prepolymers, toluene-diisocyanate alcohol adducts, aromatic/aliphatic polyisocyanate copolymers, modified diphenyl methane diisocyanates, polyisocyanurates of hexamethylene diisocyanate, biuret of hexamethylene diisocyanate and polymethylene polyphenylisocyanates. It is often desirable to use a combination of an aliphatic and an aromatic polyisocyanate.

The polyisocyanate is generally present in the oil phase an amount of about 5 to 15% based on the total oil phase.

Examples of amines that may be reacted from the aqueous phase include diethylene triamine bis(4-aminophenyl)methane, phenelenediamines including o,p,m-phenylenediamine and 4,5-dimethyl-o-phenylenediamine, naphthalene diamines including 1,5-diaminonaphtalalene, 2,2-bis(4-aminophenyl)propane, 2,4-bis(p-aminobenzyl)aniline (BABA), bis(p-aminocyclohexyl)methane, bishexamethylenetriamine (BHMT), bis(4-aminophenyl)ketone, bis(4-aminopheyl)ether, 2,4-toluene diamine 2,6-toluene-diamine, 3,4-toluenediamine, polymethylene polyphenylamine, 4,4-methylenediamine, 4,5-diaminoacenaphthene, 3,3-diaminobenzidine, 3,6-diamino durene, 2,7-diaminofluorene, 9,10-diaminophenathrene and bis(4-amino-phenyl)sulfone.

The amine may be added to the O/W emulsion as an amine salt such as a hydrochloric acid salt. While previously the amine (or a corresponding wall forming reactant) would be added as an aqueous solution, we dissolve the amine in a solvent such as a polyhydric alcohol and/or water. The concentration of the amine in this solution is about 5% to 25% by weight. The solution of the amine salt is added to the aqueous phase (containing the non-aqueous solvent) with stirring such that a wall forms after neutralizing the amine salt with sodium hydroxide. The amine solution will generally be added to the O/W emulsion such that a stoichiometric amount of the amine is present.

As previously stated, a portion of the water which normally forms the continuous phase is replaced by a water miscible solvent. This may be accomplished by a number of procedures. The continuous phase into which the oil is dispersed may be a mixed solvent of water and a water miscible solvent.
Alternatively or in addition, the wall forming reactant may be added to the O/W emulsion as a solution of the reactant in a water miscible solvent or a mixed solvent thereof.

Generally, the total amount of non-aqueous solvent in the continuous phase (after the addition of all the materials involved in the encapsulation process) is about 10 to 45% and preferably 20 to 30% based on the total amount by weight of the aqueous and non-aqueous solvent in the continuous phase. There is substantial flexibility in how these amounts are reached, however, it is generally desirable to maximize both the amount of non-aqueous solvent in the continuous phase as it exists prior to dispersing therein the internal phase and the amount of non-aqueous solvent used in adding the wall forming reactant. The amount of non-aqueous solvent in the continuous phase prior to addition of the oil phase to form the O/W emulsion will typically range from about 20 to 30%.

The solvent for the wall forming reactants added to the continuous phase to form the microcapsules may consist wholly of water, consist of the non-aqueous solvent, or contain any fraction of each. Generally, the solvent for the wall forming reactant added to the continous phase may contain 80% to 100% non-aqueous solvent depending on the solubility of the wall forming reactant in the solvent.

In order to prepare the O/W emulsion, the oil phase is added to an aqueous phase containing an emulsifier and the mixture is rapidly agitated. Presently the preferred emulsifer is gum arabic but other emulsifiers conventionally employed in carbonless paper such as polyvinyl pyrrolidone (PVP), polyvinyl alcohol (PVA), polyethylene glycol, pectin, starch, carboxymethyl cellulose (CMC) and hydroxyethylcellulose may be used. Gum arabic is preferred for its low viscosity. The emulsifer is generally used in an amount of approximately 1% to 10%.

The first and second reactants are generally reacted in approximately equal equivalent amounts, however, an excess of one reactant may produce better quality or better yield of microcapsules. In particular, in many instances, an excess of polyisocyanate may be desirable.

In order to form an ink having a high concentration of non-aqueous solids, it is also desirable to use a high internal phase to continous phase ratio in preparing the O/W emulsion. In general, the internal phase should make up at least 45% and preferably about 50% to 60% based on the total weight of the O/W emulsion (prior to addition of second reactant). The internal phase cannot be used in such high amounts with many common emulsifiers without inducing an inversion of the emulsion.

In addition to being water miscible, useful solvents must not interact with or adversely affect formulation of the wall of the microcapsule and they are preferably non-volatile as volatile solvents may create occupational hazards. Where the non-aqueous solvent is used to dissolve the second wall forming reactant, it must exhibit good solubility for it. The most typical example of such solvents are polyhydric alcohols such as ethylene glycol, 1,2- and 1,3-propylene glycol, 1,3-butylene glycol, 1,4- butylene glycol, diethylene glycol, glycerol, liquid polythylene glycols (e. g., having a molecular weight less 600), 1,2- and 1,5- pentamethylene glycol, 1,6- hexanediol, 2,5 hexanediol, propylene glycol monoethyl ether acetate, etc. Some other useful solvents are: dioxane, tetrahydrofuran, tetrahydropyran, glycol ethers such as cellosolves, diethylene glycol alkylene ethers such as Carbitols and Dowanols (available from Dow Chemical Co.).

The methods described herein yield suspensions of microcapsules containing at least 40% microcapsules and preferably about 45 to 60% microcapsules. Higher capsule contents involve viscosities which are difficult to work with and at the same time provide good quality. In terms of total solids (non-aqueous) the methods yield suspension containing least 60% and preferably at least 65% to about 70% non-aqueous solids. These suspensions exhibit particularly low viscosity such as about 200 to 500 cps and more particularly about 200 to 400 cps.

To prepare printing inks, small amounts of latex binders may be added to the high solids capsule slurry. These latices generally contain about 50% solids. The latex is mixed with the suspension of microcapsules in a weight ratio of 1 part latex to about 10 to 15 parts microcapsule suspension. A typical solids content for the coating composition after addition of the latex is about 60-75% non-aqueous solids and preferably about 65-70% solids.

If necessary or desirable, a dispersing agent or wetting agent may be added to the microcapsules prior to adding them to the ink vehicle to facilitate their dispersion into the ink vehicle. Representative examples of dispersing agents include Dispex 40 (polyacrylate sodium salt). The dispersing agent may be added to the dispersion in an amount of about 0.1 to 10% by weight.

It is also desirable to add an anticurl or cockling agent to the ink vehicle. Useful anticurl agents provide a non-volatile solvent whose presence in the paper prevents shrinkage even after drying or are hygroscopic and hold water in the paper which would otherwise evaporate hereby also preventing shrinkage. One example of a useful anti-curl and cockling agent is a combination of urea (2-6%) and calcium chloride or magnesium chloride (1-3%). Other effective anti-curl and anti-cockling agents when added to aqueous coatings are $Na_2HPO_4$, sodium acetate, sucrose, magnesium chloride, magnesium sulfate, glycerine, $Na_4P_2O_7$, $ZnCl_2$, dimethylformadide, formamide, morpholine, etc.

Coating compositions prepared as described in detail herein may be coated on paper (e.g., forms) directly on the printing press. U.S. Patents 3,016,308 and 3,914,511 disclose the processes for applying compositions containing microcapsules by rotogravure or flexoprinting. U.S. Patents 3,079,351 and 3,684,549 disclose processes for press applying wax based compositions.

Our processes are particularly useful in preparing microcapsules for use in carbonless paper, however, those skilled in the art will recognize that the techniques described herein may also be useful in preparing microcapsules for other applications including thermal recording papers, photosensitive papers, pharmaceuticals, cosmetics, etc.

For use in carbonless paper, the oil phase contains a colorless dye precursor such as crystal violet lactone (CVL), benzoyleucomethylene blue (BLMB), p-toluenesulfinate of Michler's hydrol (PTSMH) or any of the various color forming compounds commercially available for use in the carbonless paper industry. In addition to the color precursor, the oil phase typically will also include an organic solvent capable of dissolving or suspending the dye precursor. Representative examples of useful solvents include benzylbutylphthalate, dibutylphthalate, toluene, xylenes, biphenyls, etc.

The present invention is illustrated in more detail by the following non-limiting examples.

Example 1

The following solutions A, B, and C were prepared:

| A) | MIPB | 115.20 g |
| | Exxsol D-110 (a hydrocarbon solvent available from Exxon Corp.) | 28.80 g |
| | CVL (Crystal Violet Lactone) | 5.68 g |
| | Desmodur N-100 (a polyisocyanate available from Mobay, Inc.) | 9.45 g |
| | SF-50 (an aromatic polyisocyanate available from Polyblends, Inc., Livonia, MI) | 3.02 g |
| B) | Gum Arabic | 6.70 g |
| | Water | 104.00 g |
| C) | Propylene Glycol | 29.00 g |
| | Diethylenetriamine | 4.87 g |
| | Hydrochloric Acid @37% | 9.37 g |

Solution A was emulsified into Solution B in a Waring· blender over a period of two minutes at a setting of 75 volts. Solution C was then added and the mixture was transferred to a beaker equipped with an overhead stirrer. The pH was adjusted to 10.0 with 50% sodium hydroxide. The beaker was covered with aluminum foil and stirred at 65°C for 3 hours to cure the walls. A very fluid capsule dispersion was obtained containing 65% non-aqueous solids having an average capsule diameter of approximately 4.4 microns.

The microcapsules suspension prepared above was mixed with the following coating vehicle:

## Coating Vehicle

| Capsule slurry from above | 17.50 g |
| Polysar 1164 Latex (as received) | 1.40 g |
| Urea | 0.80 g |
| $CaCl_2$ | 0.30 g |

The mixture is stirred at room temperature for several hours. The final coating mixture has a viscosity of 130 cps at room temperature. Paper coated with this composition does not curl or cockle and provides a fast, intense image when marked with a phenolic resin developer sheet. Capsule integrity is good. No bluing is observed when the material is coated on a developer sheet and heated five minutes in a 100°C oven. The urea and calcium chloride are added to prevent cockle.

Example 2

The following solutions A, B, and C were prepared:

| A) | SureSol 290 (available from Koch Industries) | 115.20 g |
| | Exxsol D-110 | 28.80 g |
| | CVL | 5.68 g |
| | Desmodur N-100 | 9.45 g |
| | SF-50 | 3.02 g |
| B) | Gum Arabic | 6.70 g |
| | Water | 84.00 g |
| | Propylene Glycol | 24.00 g |
| C) | Propylene Glycol | 15.00 g |
| | Diethylenetriamine | 4.87 g |
| | Hydrochloric Acid @ 37% | 9.37 g |

The microencapsulation was carried out as in Example 1. A capsule dispersion of low viscosity was obtained containing 70.63% non-aqueous solids.

Example 3

| A) | SureSol 290 | 115.20 g |
| | Exxsol D-110 | 28.80 g |
| | CVL | 2.68 g |
| | N-102 (a black color precursor from Yamamoto Chemical Co.) | 9.54 g |
| | DCF (a green color precursor from Hodogaya Chemical Co.) | 2.21 g |
| | Copikem 14 (a color precursor from Hilton-Davis Co.) | 4.65 g |
| | N-100 | 9.45 g |
| | SF-50 | 3.02 g |
| B) | Gum Arabic | 7.12 g |
| | Water | 88.60 g |
| | Propylene Glycol | 25.30 g |
| C) | Diethylenetriamine | 4.88 g |
| | Propylene Glycol | 15.00 g |
| | HCl @37% | 9.30 g |

The encapsulation process was carried out as in Examples 1 and 2. These black-imaging capsules contain 70.5% non-aqueous solids and have a low viscosity of 260 cps at 26°C. A repeat of Example 3 showed 280 cps at 26°C.

Example 4

| A) | Sure Sol 290 | 115.20g |
| | Exxsol D-110 | 28.80g |
| | CVL | 5.68g |
| | Desmodur N-100 | 9.45g |
| | SF-50 | 3.02g |
| B) | Gum Arabic | 6.70g |
| | Water | 64.80g |
| | Propylene Glycol | 43.20g |
| C) | Propylene Glycol | 15.00g |
| | Diethylenetriamine | 4.87g |
| | Hydrochloric Acid @37% | 9.37g |

The microencapsulation was carried out as in Example 1. These capsules, when incorporated in the coating vehicle of Example 1 and drawn down on 13 pound (5.9kg) rawstock, gave a good CB sheet which imaged well on a CF carbonless sheet.

## Claims

1. A process for preparing a suspension of microcapsules containing at least 40% and preferably at least 50% microcapsules, and containing at least 60% non-aqueous solids comprising the steps of dispersing an oily solution containing a first reactive wall-forming component into a continuous aqueous phase to form an oil-in-water emulsion, adding to said oil-in-water emulsion a solution of a second reactive wall-

7

forming component in which said solution and/or said continuous phase there is contained a non-aqueous, water miscible solvent, preferably a polyhydric alcohol, the total amount of said non-aqueous water miscible solvent in the continuous phase after addition of said solution being 10-45%; and reacting said first reactive wall-forming component with said second reactive wall-forming component to form a polymer wall around the oil droplets in said oil-in-water emulsion; the amount of oil dispersed in said oil-in-water emulsion being at least 45% and preferably 55-60% based on the total amount of oil, water and water miscible solvent.

2.  A process according to Claim 1, further characterised in that said polyhydric alcohol is selected from ethylene glycol, propylene glycol, diethylene glycol, and glycerol.

3.  A process according to Claim 1 or Claim 2, further characterised in that said first reactive wall-forming component is a polyisocyanate and said second reactive wall-forming component is an amine.

4.  A process according to Claim 3, further characterised in that said polyamine is diethylenetriamine and said polyisocyanate is a combination of an aliphatic isocyanate and an aromatic tri functional isocyanate adduct.

5.  A process according to any preceding claim, further characterised in including the additional step wherein a latex is added to said suspension of microcapsules.

6.  A process according to any preceding claim, further characterised in that the continuous phase of said suspension consists of a printing ink vehicle and in that said vehicle additionally includes an anti-cockling or anti-curl agent.

7.  A process according to Claim 6, further characterised in that said anti-cockling and anti-curl agent is a combination of urea and a compound selected from calcium chloride, magnesium chloride hydrate, and magnesium sulphate.

8.  A process according to any preceding claim, further characterised in that said aqueous solution contains gum arabic.

9.  A process according to any preceding claim, further characterised in that said suspension of microcapsules possesses a viscosity of about 150 to 600 cps.

10. A printing ink containing a suspension of microcapsules prepared by a process according to any of Claims 1 to 9.


**Patentansprüche**

1.  Verfahren zur Herstellung einer Suspension von Mikrokapseln, die wenigstens 40%, vorzugsweise wenigstens 50% Mikrokapseln und wenigstens 60% nicht-wäßrige Feststoffe enthält, wobei das Verfahren folgende Schritte umfaßt:
    - Dispergieren einer öligen Lösung, die eine erstereaktive wandbildende Verbindung enthält, in einer kontinuierlichen wäßrigen Phase zur Bildung einer Öl-in-Wasser-Emulsion,
    - Hinzufügen einer Lösung einer zweiten reaktiven wandbildenden Verbindung zu der Öl-in-Wasser-Emulsion, wobei in der genannten Lösung und/oder in der genannten kontinuierlichen Phase ein nicht-wäßriges, wassermischbares Lösungsmittel enthalten ist, vorzugweise ein mehrere Hydroxylgruppen enthaltender Alkohol, und die gesamte Menge des nicht-wäßrigen, wassermischbaren Lösungsmittels in der kontinuierlichen Phase nach Hinzufügung der genannten Lösung 10 bis 45% beträgt,
    - Reagierenlassen der ersten reaktiven, wandbildenden Verbindung mit der zweiten reaktiven, wandbildenden Verbindung zur Bildung einer polymeren Wand um die Öltröpfchen in der genannten Öl-in-Wasser-Emulsion; dabei ist der Anteil von Öl, das in der genannten Öl-in-Wasser-Emulsion dipergiert ist, wenigstens 45% und vorzugsweise 55 bis 60%, basierend auf der Gesamtmenge, summiert aus Öl, Wasser und wassermischbarem Lösungsmittel.

2.  Verfahren nach Anspruch 1, dadurch gekennzeichnet, daß der mehrere Hydroxylgruppen enthaltende Alkohol gewählt ist aus: Ethylenglycol; Propylenglycol, Diethylenglycol, und Glycerin.

3. Verfahren nach Anspruch 1 oder 2, dadurch gekennzeichnet, daß die erste reaktive, wandbildende Verbindung ein Polyisocyanat und die genannte zweite reaktive, wandbildende Verbindung ein Amin ist.

4. Verfahren nach Anspruch 3, dadurch gekennzeichnet, daß das genannte Polyamin Diethylentriamin und das Polyisocyanat eine Kombination eines aliphatischen Isocyanats und eines aromatischen trifunktionellen Isocyanat-Addukts ist.

5. Verfahren nach einem der vorhergehenden Ansprüche, dadurch gekennzeichnet, daß es als zusätzlichen Schritt die Hinzufügung von Latex zu der genannten Mikrokapsel-Suspension umfaßt.

6. Verfahren nach einem der vorhergehenden Ansprüche, dadurch gekennzeichnet, daß die kontinuierliche Phase der Suspension aus einem Druckfarben-Träger besteht und daß der Träger ein Agens gegen das Welligwerden oder das Kräuseln (anti-cockling or anti-curling agent) enthält.

7. Verfahren nach Anspruch 6, dadurch gekennzeichnet, daß das Agens gegen das Welligwerden oder das Kräuseln eine Kombination aus Harnstoff und einer Verbindung, ausgewählt aus Calciumchlorid, Magnesiumchlorid, Magnesiumchlorid-Hydrat und Magnesiumsulfat, ist.

8. Verfahren nach einem der vorhergehenden Ansprüche, dadurch gekennzeichnet, daß die wäßrige Lösung Gummi arabicum enthält.

9. Verfahren nach einem der vorhergehenden Ansprüche, dadurch gekennzeichnet, daß die Suspension der Mikrokapseln eine Viskosität von etwa 150 bis 600 cps (Centipoise) besitzt.

10. Druckfarbe, die eine Mikrokapsel-Suspension enthält, die durch ein Verfahren nach einem der vorhergehenden Ansprüche 1 bis 9 hergestellt ist.


## Revendications

1. Un procédé pour la préparation d'une suspension de microcapsules contenant au moins 40% et préférablement au moins 50% de microcapsules, et contenant au moins 60% de solides non aqueux, qui comprend les étapes de dispersion d'une solution huileuse contenant un premier composant réactif de formation de paroi dans une phase aqueuse continue pour, former une émulsion huile dans eau, d'addition à ladite émulsion huile dans eau d'une solution d'un second composant réactif de formation de paroi dans lequel ladite solution et/ou ladite phase continue contient un solvant non aqueux miscible à l'eau, de préférence un polyol, la quantité totale dudit solvant non aqueux, miscible à l'eau, dans la phase continue, après addition de ladite solution, étant de 10 à 45%; et la réaction entre lesdits premier et second composants réactifs de formation de paroi pour former une paroi de polymère autour des gouttes d'huiles de ladite émulsion huile. dans eau; la quantité d'huile dispersée dans ladite émulsion huile dans eau étant au moins de 45% et préférablement de 55 à 60% sur la base de la quantité totale d'huile, d'eau et de solvant miscible à l'eau.

2. Un procédé selon la revendication 1, caractérisé en outre en ce que ledit polyol est choisi parmi l'éthylèneglycol, le propylèneglycol, le diéthylèneglycol et le glycérol.

3. Un procédé selon la revendication 1 ou la revendication 2, caractérisé en outre en ce que ledit premier composant réactif de formation de paroi est un polyisocyanate et ledit second composant réactif de formation de paroi est une amine.

4. Un procédé selon la revendication 3, caractérisé en outre en ce que ladite polyamine est la diéthylènetriamine et ledit polyisocyanate est une combinaison d'un isocyanate aliphatique et d'un adduct d'un isocyanate aromatique trifonctionnel.

5. Un procédé selon l'une quelconque des précédentes revendications caractérisé en outre par l'addition de l'étape supplémentaire dans laquelle un latex est ajouté à ladite suspension de microcapsules.

6. Un procédé selon l'une quelconque des précédentes revendications caractérisé en outre en ce que la phase continue de ladite suspension se compose d'un vecteur encre d'impression et en ce que ledit vecteur comprend en sus un agent anti-ondulation ou un agent anti-froissure.

7. Un procédé selon la revendication 6, caractérisé en outre en ce que ledit agent anti-ondulation et anti-froissure est une combinaison d'urée et d'un composé choisi parmi le chlorure de calcium, le chlorure de magnésium hydraté et le sulfate de magnésium.

8. Un procédé selon l'une quelconque des précédentes revendications, caractérisé en outre en ce que ladite solution aqueuse contient de la gomme arabique.

9. Un procédé selon l'une quelconque des précédentes revendications, caractérisé en outre en ce que ladite suspension de microcapsules possède une viscosité allant de 150 à 600 cps environ.

10. Une encre d'impression contenant une suspension de microcapsules préparée selon l'une quelconque des revendications de 1 à 9.